# FASCICULE DE BREVET EUROPEEN

(11) **EP 4 560 389 B1**
(45) Date de publication et mention de la délivrance du brevet: **10.12.2025**
(21) Numéro de dépôt: 24211082.3
(22) Date de dépôt: 06.11.2024
(51) Int. Cl.: G02F 1/015, G02F 1/025

(54) **PROCÉDÉ DE FABRICATION D'UN MODULATEUR ÉLECTRO-OPTIQUE À EFFET KERR**
VERFAHREN ZUR HERSTELLUNG EINES ELEKTROOPTISCHEN KERR-MODULATORS
METHOD OF MAKING A KERR EFFECT ELECTRO-OPTICAL MODULATOR

(30) Priorité: 24.11.2023 FR 2313006
(43) Date de publication de la demande: 28.05.2025
(73) Titulaire: Commissariat à l'Energie Atomique et aux Energies Alternatives, 75015 Paris (FR)
(72) Inventeur: REGHIOUA, Imene, 38054 GRENOBLE CEDEX 09 (FR); VIROT, Leopold, 38054 GRENOBLE CEDEX 09 (FR); PELTIER, Jonathan, 38054 GRENOBLE CEDEX 09 (FR)
(74) Mandataire: INNOV-GROUP

(56) Documents cités:
- CN-A- 104 393 133
- US-A1- 2020 301 177
- US-B1- 10 627 696
- US-B2- 9 671 670
- SINATKAS GEORGIOS ET AL: "Electro-optic modulation in integrated photonics", JOURNAL OF APPLIED PHYSICS, AMERICAN INSTITUTE OF PHYSICS, 2 HUNTINGTON QUADRANGLE, MELVILLE, NY 11747, vol. 130, no. 1, 2 July 2021 (2021-07-02), XP012257868, ISSN: 0021-8979, [retrieved on 20210702], DOI: 10.1063/5.0048712
- MARDIANA B ET AL: "Analyses for various doping structures of SOI-based optical phase modulator using free carrier dispersion effect", OPTIK, WISSENSCHAFTLICHE VERLAG GMBH, DE, vol. 125, no. 6, 18 December 2013 (2013-12-18), pages 1800 - 1803, XP028808773, ISSN: 0030-4026, DOI: 10.1016/J.IJLEO.2013.09.050
- JONATHAN PELTIER ET AL: "High speed silicon photonic electro-optic Kerr modulation", ARXIV.ORG, CORNELL UNIVERSITY LIBRARY, 201 OLIN LIBRARY CORNELL UNIVERSITY ITHACA, NY 14853, 27 February 2023 (2023-02-27), XP091447390

## Description

### Domaine technique

L'invention se rapporte au domaine technique des modulateurs électro-optiques à effet Kerr.

L'invention trouve notamment son application dans les transmetteurs pour les communications optiques grâce à leur large bande-passante et leur faible consommation énergétique.

### État de l'art

Un procédé de fabrication d'un modulateur électro-optique à effet Kerr connu de l'état de la technique, tel que divulgué dans SINATKAS GEORGIOS ET AL: "Electro-optic modulation in integrated photonics",JOURNAL OF APPLIED PHYSICS, AMERICAN INSTITUTE OF PHYSICS, 2 HUNTINGTON QUADRANGLE, MELVILLE, NY 11747, vol. 130, no. 1, 2 juillet 2021, comporte les étapes :
A) utiliser un substrat ;
B) former un guide d'onde sur le substrat de manière à guider une propagation d'une onde électromagnétique, le guide d'onde comportant :
   - un cœur, comprenant une jonction de type p-n ou une structure de type p-i-n ;
   - une gaine optique, entourant le cœur ;
C) polariser la jonction de type p-n ou la structure de type p-i-n de manière à appliquer un champ électrique au sein du cœur.

Un tel procédé de l'état de la technique n'est pas entièrement satisfaisant dans la mesure où la modulation de la phase de l'onde électromagnétique se propageant au sein du cœur n'est pas uniquement obtenue par la modulation du champ électrique appliqué au sein du cœur, appelé effet Kerr. En effet, la variation de la densité de porteurs libres, issus de la jonction de type p-n ou de la structure de type p-i-n, va également contribuer à moduler la phase (et l'amplitude) de l'onde électromagnétique se propageant au sein du cœur. Ce phénomène est appelé effet de dispersion plasma (PDE pour « *Plasma Dispersion Effect* » en langue anglaise). Un tel procédé de l'état de la technique conduit donc à une concurrence entre l'effet Kerr et l'effet de dispersion plasma.

En outre, la variation de la densité de porteurs libres, issus de la jonction de type p-n ou de la structure de type p-i-n, va également induire un changement de l'absorption optique de l'onde électromagnétique se propageant au sein du cœur, et dégrader par là-même les performances du modulateur électro-optique. Ce phénomène est appelé effet « *chirp* » en langue anglaise, et limite notamment la fréquence maximale de modulation du modulateur électro-optique.

### Exposé de l'invention

L'invention vise à remédier en tout ou partie aux inconvénients précités. A cet effet, l'invention a pour objet un procédé de fabrication d'un modulateur électro-optique à effet Kerr, comportant les étapes :
a) utiliser un substrat ;
b) former un guide d'onde sur le substrat de manière à guider une propagation d'une onde électromagnétique, le guide d'onde comportant :
   - un cœur, comprenant une jonction de type p-n ou une structure de type p-i-n ;
   - une gaine optique, entourant le cœur ;
   le cœur et la gaine optique présentant une interface ;
c) irradier l'interface avec un rayonnement ionisant de manière à piéger à l'interface des porteurs libres issus de la jonction de type p-n ou de la structure de type p-i-n ;
d) polariser la jonction de type p-n ou la structure de type p-i-n de manière à appliquer un champ électrique au sein du cœur.

Ainsi, un tel procédé selon l'invention permet, grâce à l'étape c), de limiter voire d'annihiler l'influence néfaste des porteurs libres en termes d'effet « *chirp* » et d'effet de dispersion plasma. En effet, tout ou partie des porteurs libres se retrouvent piégés à l'interface entre le cœur et la gaine optique du guide d'onde, grâce au rayonnement ionisant appliqué lors de l'étape c). Le rayonnement ionisant permet de créer des défauts à l'interface entre le cœur et la gaine optique, constituant ainsi des sites de piégeage des porteurs libres.

En d'autres termes, un tel procédé selon l'invention autorise une modulation de phase pure (c'est-à-dire sans modulation d'amplitude ou avec une modulation d'amplitude restreinte par rapport à l'état de la technique) de l'onde électromagnétique se propageant au sein du cœur du guide d'onde, et autorise une plus grande fréquence maximale de modulation du modulateur électro-optique par rapport à l'état de la technique.

Le procédé selon l'invention peut comporter une ou plusieurs des caractéristiques suivantes.

Selon une caractéristique de l'invention :
- l'étape c) conduit à une concentration des porteurs libres piégés à l'interface ;
- l'étape c) est suivie d'une étape de recuit thermique exécutée selon un budget thermique adapté pour réduire la concentration des porteurs libres piégés à l'interface.

Ainsi, un avantage procuré est de pouvoir réduire la concentration des porteurs libres piégés à l'interface entre le cœur et la gaine optique du guide d'onde afin de réduire les pertes optiques du modulateur électro-optique. Un tel recuit thermique permet de neutraliser les défauts obtenus par le rayonnement ionisant appliqué lors de l'étape c).

Selon une caractéristique de l'invention, l'étape c) est exécutée selon une dose d'irradiation supérieure ou égale à un seuil au-delà duquel les porteurs libres issus de la jonction de type p-n ou de la structure de type p-i-n ne circulent plus dans une zone du cœur où un mode de propagation de l'onde électromagnétique est guidé.

Ainsi, un avantage procuré est d'annihiler la contribution de l'effet de dispersion plasma et de l'effet « *chirp* » pour le mode de propagation guidée.

Selon une caractéristique de l'invention, l'étape c) est exécutée avec des rayons X.

Ainsi, un avantage procuré est la facilité d'obtention d'un tel rayonnement ionisant. L'énergie des rayons X est suffisante pour obtenir un rayonnement ionisant traversant une puce de modulateur électro-optique, par exemple intégrée sur silicium.

Selon une caractéristique de l'invention, l'étape b) est exécutée avec un cœur réalisé dans un matériau choisi parmi le silicium, un carbure de silicium amorphe enrichi en silicium, un nitrure de silicium enrichi en silicium.

Ainsi, un avantage procuré par de tels matériaux est d'obtenir un effet Kerr élevé en raison de leur indice de réfraction non-linéaire du second ordre élevé. Un autre avantage est leur tension de claquage élevée.

Selon une caractéristique de l'invention, l'étape a) est exécutée avec un substrat de type semi-conducteur sur isolant comportant successivement :
- une plaquette ;
- une couche diélectrique, formant une partie de la gaine optique du guide d'onde formé lors de l'étape b) ;
- une couche réalisée dans un matériau semi-conducteur, à partir de laquelle est formé le cœur du guide d'onde lors de l'étape b).

Ainsi, un avantage procuré par un tel substrat est de faciliter la fabrication du guide d'onde puisqu'une partie de la gaine optique est déjà présente avec la couche diélectrique. Lorsque le matériau semi-conducteur est le silicium, un avantage procuré est d'utiliser la photonique intégrée sur silicium, c'est-à-dire l'intégration des fonctions photoniques avec des circuits électroniques à l'échelle de la plaquette de silicium.

Selon une caractéristique de l'invention, l'étape b) est exécutée avec une gaine optique réalisée en dioxyde de silicium SiO₂.

Ainsi, les propriétés de ce matériau sont intéressantes en termes d'indice de réfraction (qui doit être inférieur à celui du cœur), de compatibilité CMOS (« *Complementary Metal Oxide Semiconductor* » en langue anglaise), et d'isolation électrique.

Selon une caractéristique de l'invention, l'étape b) est exécutée de sorte que le guide d'onde formé est en arête, le cœur comportant :
- une zone inférieure, planaire, comprenant la jonction de type p-n ou la structure de type p-i-n ;
- une zone supérieure, formant une arête ou deux arêtes, surmontant la zone inférieure, et où un mode de propagation de l'onde électromagnétique est guidé.

Ainsi, un avantage procuré par une telle architecture de guide d'onde est de faciliter l'évacuation des porteurs libres de la zone inférieure vers les sites de piégeage créés à l'interface entre le cœur et la gaine optique par le rayonnement ionisant, et ce afin d'obtenir une zone supérieure avec le moins possible de porteurs libres. En particulier, une architecture à double arête permet d'augmenter la proportion du mode optique situé dans la zone intrinsèque afin de limiter les pertes dues au dopage.

Selon une caractéristique de l'invention, la dose d'irradiation est supérieure ou égale au seuil au-delà duquel les porteurs libres issus de la jonction de type p-n ou de la structure de type p-i-n ne circulent plus dans la zone supérieure du cœur où le mode de propagation de l'onde électromagnétique est guidé.

Ainsi, un avantage procuré est d'annihiler la contribution de l'effet de dispersion plasma et de l'effet « *chirp* » pour le mode de propagation guidée dans la zone supérieure nervurée du guide d'onde. Les porteurs libres ne peuvent alors plus circuler de la zone inférieure vers la zone supérieure du cœur où le mode de propagation de l'onde électromagnétique est guidé. Tout se passe comme si les charges piégées à l'interface entre le cœur et la gaine optique créent un pincement («*pinch-off*» en langue anglaise) fermant tout canal permettant la circulation des porteurs libres de la zone inférieure vers la zone supérieure du cœur où le mode de propagation de l'onde électromagnétique est guidé.

Selon une caractéristique de l'invention, l'étape b) est exécutée de sorte que le guide d'onde formé comporte une couche d'encapsulation, entourant la gaine optique.

### Définitions

- Par « modulateur électro-optique », on entend un dispositif comportant un milieu adapté pour moduler la phase d'une onde électromagnétique se propageant dans le milieu, lorsqu'un champ électrique extérieur est appliqué à ce milieu.
- Par « effet Kerr », on entend l'effet Kerr électro-optique, également appelé « *DC Kerr Effect* » en langue anglaise, qui diffère de l'effet Kerr optique (« *AC Kerr Effect* » en langue anglaise).
- Par « substrat », on entend un support physique autoporté, réalisé dans un matériau de base à partir duquel peut être formé un guide d'onde. Un substrat peut être une « tranche » (également dénommée « plaquette », « *wafer* » en langue anglaise) qui se présente généralement sous la forme d'un disque issu d'une découpe dans un lingot d'un matériau cristallin.
- Par « jonction de type p-n », on entend une jonction entre une zone dopée de type p et une zone dopée de type n. La zone dopée de type p comporte des dopants de type p, c'est-à-dire des espèces (e.g. impuretés) qui, introduites dans la matrice du matériau du cœur du guide d'onde, acceptent un électron de la bande de conduction. La zone dopée de type n comporte des dopants de type n, c'est-à-dire des espèces (e.g. impuretés) qui, introduites dans la matrice du matériau du cœur du guide d'onde, donnent un électron à la bande de conduction.
- Par « structure de type p-i-n », on entend une jonction entre une zone dopée de type p et une zone intrinsèque, et une jonction entre la zone intrinsèque et une zone dopée de type n. La zone dopée de type p comporte des dopants de type p, c'est-à-dire des espèces (e.g. impuretés) qui, introduites dans la matrice du matériau du cœur du guide d'onde, acceptent un électron de la bande de conduction. La zone dopée de type n comporte des dopants de type n, c'est-à-dire des espèces (e.g. impuretés) qui, introduites dans la matrice du matériau du cœur du guide d'onde, donnent un électron à la bande de conduction. La zone intrinsèque est dépourvue de dopants.
- Par « porteurs libres », on entend les porteurs de charge électrique (électrons et trous) qui sont libres de pouvoir circuler au sein du cœur du guide d'onde.
- Par « polariser », on entend le fait d'appliquer une différence de potentiel électrique entre la zone dopée de type p et la zone dopée de type n de la jonction de type p-n ou de la structure de type p-i-n.
- Par « champ électrique », on entend un champ électrique possédant une intensité suffisamment importante de sorte qu'une susceptibilité non-linéaire du troisième ordre dans le cœur du guide d'onde engendre un effet Kerr. L'intensité du champ électrique doit demeurer inférieure à la valeur maximale du champ électrique que le modulateur électro-optique peut supporter avant une rupture (claquage) d'un matériau constituant.
- Par « rayonnement ionisant », on entend un rayonnement possédant une énergie suffisante pour arracher au moins un électron aux atomes traversés par le rayonnement ionisant. En l'espèce, le rayonnement ionisant est adapté pour arracher au moins un électron aux atomes du matériau dans lequel est réalisée la gaine optique.
- Par « recuit thermique », on entend un traitement thermique comportant :
   (i) une phase de montée graduelle en température (rampe de montée) jusqu'à atteindre une température dite température de recuit ;
   (ii) une phase de maintien (plateau) à la température de recuit, pendant une durée dite durée de recuit ;
   (iii) une phase de refroidissement.
- Par « budget thermique », on entend un apport d'énergie de nature thermique, déterminé par le choix d'une valeur de la température de recuit et le choix d'une valeur de la durée de recuit.
- Par « rayons X », on entend un rayonnement électromagnétique dont la longueur d'onde est comprise entre 0,001 nm et 10 nm.

### Brève description des dessins

D'autres caractéristiques et avantages apparaîtront dans l'exposé détaillé de différents modes de réalisation de l'invention, l'exposé étant assorti d'exemples et de références aux dessins joints.

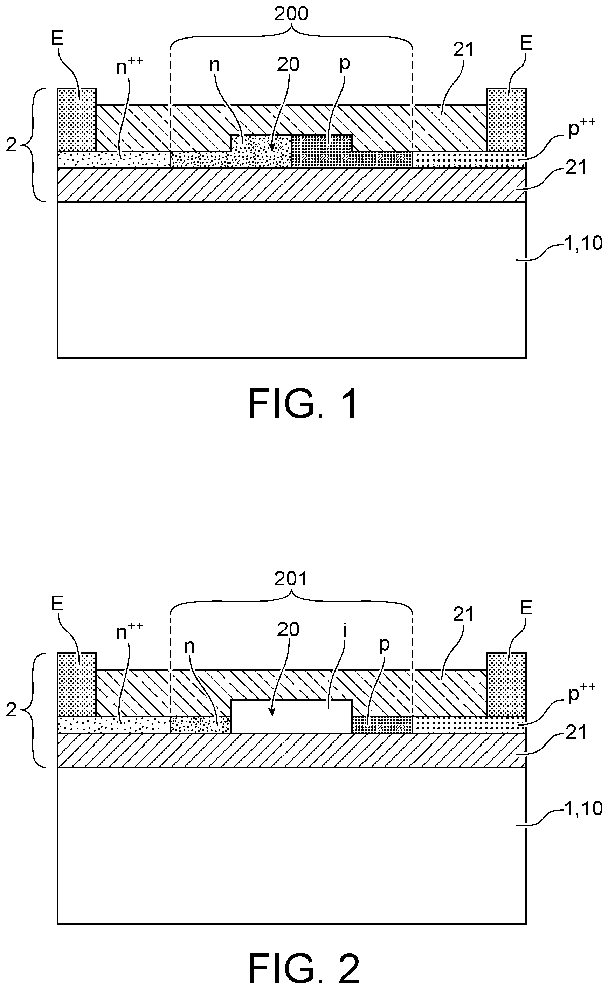

Figure 1 est une vue schématique en coupe d'un exemple de modulateur électro-optique fabriqué par un procédé selon l'invention, le cœur du guide d'onde comprenant une jonction de type p-n.
Figure 2 est une vue schématique en coupe d'un exemple de modulateur électro-optique fabriqué par un procédé selon l'invention, le cœur du guide d'onde comprenant une structure de type p-i-n.

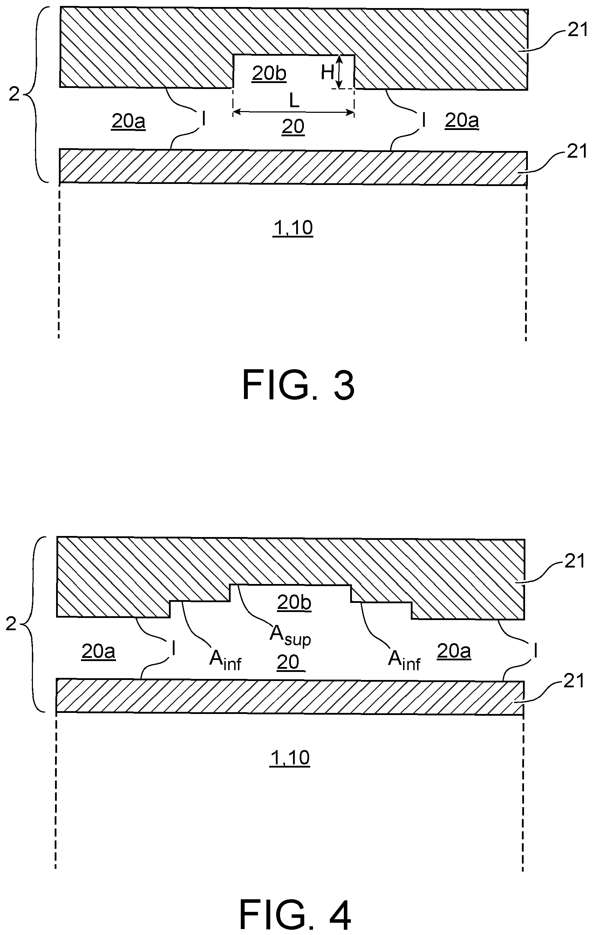

Figure 3 est une vue schématique partielle en coupe à l'échelle agrandie d'un guide d'onde (structure en arête) d'un modulateur électro-optique fabriqué par un procédé selon l'invention.
Figure 4 est une vue schématique partielle en coupe à l'échelle agrandie d'un guide d'onde (structure en double arête) d'un modulateur électro-optique fabriqué par un procédé selon l'invention.

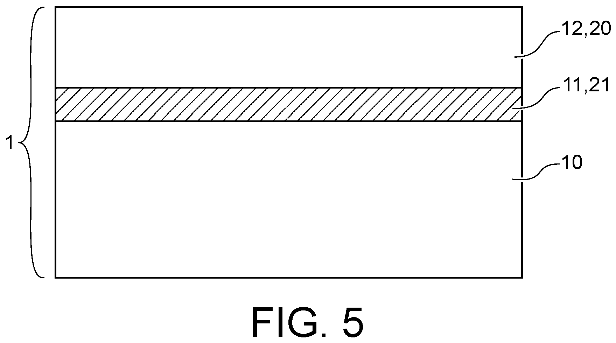

Figure 5 est une vue schématique en coupe d'un substrat de type semi-conducteur sur isolant pouvant être utilisé pour l'étape a) d'un procédé selon l'invention.

Il est à noter que les dessins décrits ci-avant sont schématiques, et ne sont pas nécessairement à l'échelle par souci de lisibilité et pour en simplifier leur compréhension. Les coupes sont effectuées selon la normale à la surface du substrat.

### Exposé détaillé des modes de réalisation

Les éléments identiques ou assurant la même fonction porteront les mêmes références pour les différents modes de réalisation, par souci de simplification.

Un objet de l'invention est un procédé de fabrication d'un modulateur électro-optique à effet Kerr, comportant les étapes :
a) utiliser un substrat 1 ;
b) former un guide d'onde 2 sur le substrat 1 de manière à guider une propagation d'une onde électromagnétique, le guide d'onde 2 comportant :
   - un cœur 20, comprenant une jonction 200 de type p-n ou une structure 201 de type p-in ;
   - une gaine optique 21, entourant le cœur 20 ;
   le cœur 20 et la gaine optique 21 présentant une interface I ;
c) irradier l'interface I avec un rayonnement ionisant de manière à piéger à l'interface I des porteurs libres issus de la jonction 200 de type p-n ou de la structure 201 de type p-i-n ;
d) polariser la jonction 200 de type p-n ou la structure 201 de type p-i-n de manière à appliquer un champ électrique au sein du cœur 20.

### Etape a)

L'étape a) consiste à utiliser un substrat 1 à partir duquel sera formé le guide d'onde 2.

L'étape a) est avantageusement exécutée avec un substrat 1 de type semi-conducteur sur isolant comportant successivement :
- une plaquette 10 ;
- une couche diélectrique 11, formant une partie de la gaine optique 21 du guide d'onde 2 formé lors de l'étape b) ;
- une couche 12 (dite couche utile) réalisée dans un matériau semi-conducteur, à partir de laquelle est formé le cœur 20 du guide d'onde 2 lors de l'étape b).

La plaquette 10 peut être réalisée en silicium. La couche diélectrique 11 forme la partie inférieure de la gaine optique 21 du guide d'onde 2 formé lors de l'étape b). La couche diélectrique 11 est donc avantageusement réalisée dans le même matériau que la partie supérieure de la gaine optique 21 du guide d'onde formé lors de l'étape b). La couche utile 12 est avantageusement réalisée dans un matériau semi-conducteur qui est le matériau du cœur 20 du guide d'onde 2 formé lors de l'étape b).

A titre d'exemple non limitatif, un substrat 1 de type semi-conducteur sur isolant peut être obtenu par la technologie Smart-Cut^{™} connue de l'homme du métier.

### Etape b)

L'étape b) consiste à former un guide d'onde 2 sur le substrat 1. Le guide d'onde 2 est agencé pour guider une onde électromagnétique en son sein.

Le guide d'onde 2 comporte un cœur 20. L'étape b) est avantageusement exécutée avec un cœur 20 réalisé dans un matériau choisi parmi le silicium, un carbure de silicium amorphe enrichi en silicium, un nitrure de silicium enrichi en silicium.

En particulier, le carbure de silicium amorphe enrichi en silicium possède un indice de réfraction non-linéaire du second ordre de 2,5 10⁻¹⁷ m²/W, environ quatre fois supérieur à celui du silicium. De plus, le carbure de silicium amorphe enrichi en silicium possède une bande interdite de 2,1 eV, plus élevée que le silicium, supprimant l'absorption à deux photons aux longueurs d'onde des télécommunications. Le carbure de silicium amorphe enrichi en silicium possède un indice de réfraction de 2,6 qui permet de réduire le confinement de l'onde électromagnétique par rapport au silicium. Enfin, le carbure de silicium amorphe enrichi en silicium possède une tension de claquage plus élevée que celle du silicium.

Le nitrure de silicium enrichi en silicium possède un indice de réfraction non-linéaire du second ordre de 2 10⁻¹⁷ m²/W, un indice de réfraction de 3, et une tension de claquage plus élevée que celle du silicium.

Le cœur 20 du guide d'onde 2 est avantageusement obtenu à partir de la couche utile 12 du substrat 1.

Le cœur 20 comprend une jonction 200 de type p-n. Selon une alternative, le cœur 20 comprend une structure 201 de type p-i-n. La jonction 200 de type p-n et la structure 201 de type p-i-n peuvent être obtenues par des techniques de dopage connues de l'homme du métier, par exemple par implantation ou par diffusion. A titre d'exemple non limitatif, le dopage de type p peut être obtenu en introduisant du bore. Le dopage de type n peut être obtenu en introduisant du phosphore. Les dopants de type p de la jonction 200 de type p-n ou de la structure 201 de type p-i-n peuvent avoir une concentration de l'ordre de 10¹⁷ cm⁻³. Les dopants de type n de la jonction 200 de type p-n ou de la structure 201 de type p-i-n peuvent avoir une concentration de l'ordre de 10¹⁸ cm⁻³. Le guide d'onde 2 comporte avantageusement une zone p⁺⁺ fortement dopée de type p, agencée pour relier la zone dopée de type p de la jonction 200 de type p-n ou de la structure 201 de type p-i-n avec une zone E de contact métallique. La concentration des dopants de type p de la zone p⁺⁺ peut atteindre 10²⁰ cm⁻³. Le guide d'onde 2 comporte avantageusement une zone n⁺⁺ fortement dopée de type n, agencée pour relier la zone dopée de type n de la jonction 200 de type p-n ou de la structure 201 de type p-i-n avec une zone E de contact métallique. La concentration des dopants de type n de la zone n⁺⁺ peut atteindre 10²⁰ cm⁻³.

Le guide d'onde 2 comporte une gaine optique 21, s'étendant autour du cœur 20 suivant une interface I. La gaine optique 21 possède un indice de réfraction strictement inférieur à celui du cœur 20. La partie supérieure de la gaine optique 21 peut être obtenue par une technique de dépôt connue de l'homme du métier. La partie inférieure de la gaine optique 21 peut être la couche diélectrique 11 du substrat 1. L'étape b) est avantageusement exécutée avec une gaine optique 21 réalisée en dioxyde de silicium SiO₂.

Selon un mode de réalisation, l'étape b) est exécutée de sorte que le guide d'onde 2 formé est en arête (« *rib* » en langue anglaise, on parle également de nervure), le cœur 20 comportant :
- une zone inférieure 20a, planaire, comprenant la jonction 200 de type p-n ou la structure 201 de type p-i-n ;
- une zone supérieure 20b, formant une arête, surmontant la zone inférieure 20a, et où un mode de propagation de l'onde électromagnétique est guidé.

D'autres architectures de guide d'onde 2 sont envisageables, par exemple un guide d'onde 2 rectangulaire (« *strip* » en langue anglaise). Toutefois, un avantage procuré par une architecture en arête est de faciliter l'évacuation des porteurs libres de la zone inférieure 20a vers les sites de piégeage créés à l'interface I entre le cœur 20 et la gaine optique 21 par le rayonnement ionisant, et ce afin d'obtenir une zone supérieure 20b avec le moins possible de porteurs libres. A titre d'exemple non limitatif, la zone supérieure 20b du guide d'onde 2 en arête peut présenter une largeur L de 400 nm, et une hauteur H de 220 nm.

Selon un mode de réalisation, l'étape b) est exécutée de sorte que le guide d'onde 2 formé est en arête, le cœur 20 comportant :
- une zone inférieure 20a, planaire, comprenant la jonction 200 de type p-n ou la structure 201 de type p-i-n ;
- une zone supérieure 20b, formant deux arêtes A_{inf}, Aₛᵤₚ, surmontant la zone inférieure 20a, et où un mode de propagation de l'onde électromagnétique est guidé.

L'arête supérieure Aₛᵤₚ est agencée pour confiner latéralement le mode optique. L'arête inférieure A_{inf} s'étend sous l'arête supérieure Aₛᵤₚ, de part et d'autre de l'arête supérieure Aₛᵤₚ. L'arête inférieure A_{inf} délimite deux zones sous-jacentes, une première zone sous-jacente comportant des dopants de type n, une deuxième zone sous-jacente comportant des dopants de type p. Une telle architecture à double arête permet d'appliquer le champ électrique lors de l'étape d) au plus proche du mode optique.

L'étape b) est avantageusement exécutée de sorte que le guide d'onde 2 formé comporte une couche d'encapsulation (non illustrée), entourant la gaine optique 21. En d'autres termes, la couche d'encapsulation s'étend autour de la gaine optique 21. La couche d'encapsulation, pouvant être réalisée dans un polymère, peut être déposée sur la partie supérieure de la gaine optique 21 par une technique de dépôt connue de l'homme du métier.

### Etape c)

L'étape c) consiste à appliquer un rayonnement ionisant à l'interface I entre le cœur 20 et la gaine optique 21 du guide d'onde 2. Pour des raisons pratiques, l'irradiation de l'étape c) est avantageusement globale au sens où l'ensemble du guide d'onde 2 formé lors de l'étape b) est irradié. Le rayonnement ionisant doit au moins atteindre l'interface I entre le cœur 20 et la gaine optique 21. Plus précisément, le rayonnement ionisant doit au moins atteindre l'interface I entre le cœur 20 et la partie supérieure de la gaine optique 21. En pratique, l'irradiation de l'étape c) est globale et l'ensemble de l'interface I entre le cœur 20 et la gaine optique 21 est atteint par le rayonnement ionisant.

L'étape c) est exécutée de sorte que des porteurs libres, issus de la jonction 200 de type p-n ou issus de la structure 201 de type p-i-n, se retrouvent piégés à l'interface I entre le cœur 20 et la gaine optique 21 du guide d'onde 2. A titre d'exemple non limitatif, pour une dose de rayonnement ionisant de l'ordre de 10⁶ Gy (Gray), la concentration des porteurs libres piégés à l'interface I est de l'ordre de 10²⁰ cm⁻³.

L'étape c) est avantageusement exécutée avec des rayons X. L'énergie des rayons X est suffisante pour obtenir un rayonnement ionisant traversant une puce de modulateur électro-optique, par exemple intégrée sur silicium. Le rayonnement gamma peut également être envisageable comme rayonnement ionisant pour certaines applications.

L'étape c) est avantageusement exécutée selon une dose d'irradiation supérieure ou égale à un seuil au-delà duquel les porteurs libres (issus de la jonction 200 de type p-n ou issus de la structure 201 de type p-i-n) ne circulent plus dans une zone du cœur 20 où un mode de propagation de l'onde électromagnétique est guidé. Dans le cas d'un guide d'onde 2 en arête, la dose d'irradiation est supérieure ou égale au seuil au-delà duquel les porteurs libres (issus de la jonction 200 de type p-n ou issus de la structure 201 de type p-i-n) ne circulent plus dans la zone supérieure 20b du cœur 20 où le mode de propagation de l'onde électromagnétique est guidé. A titre d'exemple non limitatif, dans le cas de rayons X avec un cœur 20 en silicium et une gaine optique 21 en dioxyde de de silicium, le seuil est de l'ordre de 10⁶ Gy.

L'étape c) conduit à une concentration des porteurs libres piégés à l'interface I entre le cœur 20 et la gaine optique 21 du guide d'onde 2. L'étape c) est avantageusement suivie d'une étape de recuit thermique, exécutée selon un budget thermique adapté pour réduire la concentration des porteurs libres piégés à l'interface I entre le cœur 20 et la gaine optique 21 du guide d'onde 2. L'étape de recuit thermique est exécutée avant l'étape d). A titre d'exemple non limitatif, dans le cas de rayons X avec un cœur 20 en silicium et une gaine optique 21 en dioxyde de de silicium, la température de recuit peut être de l'ordre de 200°C.

### Etape d)

L'étape d) consiste à polariser la jonction 200 de type p-n ou la structure 201 de type p-in. L'étape d) est exécutée de manière à appliquer un champ électrique au sein du cœur 20 du guide d'onde 2.

L'intensité du champ électrique doit être suffisamment importante de sorte qu'une susceptibilité non-linéaire du troisième ordre dans le cœur 20 du guide d'onde 2 engendre un effet Kerr. L'intensité du champ électrique doit demeurer inférieure à la valeur maximale du champ électrique que le modulateur électro-optique peut supporter avant une rupture (claquage) d'un matériau constituant. Par exemple, pour un cœur 20 réalisé en silicium, le champ de claquage est de l'ordre de 2,5 10⁵ V/cm. La tension appliquée entre les zones E de contact métallique peut être alors de l'ordre de la dizaine de volts à quelques dizaines de volts.

## Revendications

1. Procédé de fabrication d'un modulateur électro-optique à effet Kerr, comportant les étapes :
a) utiliser un substrat (1) ;
b) former un guide d'onde (2) sur le substrat (1) de manière à guider une propagation d'une onde électromagnétique, le guide d'onde (2) comportant :
- un cœur (20), comprenant une jonction (200) de type p-n ou une structure (201) de type p-i-n ;
- une gaine optique (21), entourant le cœur (20) ;
le cœur (20) et la gaine optique (21) présentant une interface (I) ;
c) irradier l'interface (I) avec un rayonnement ionisant de manière à piéger à l'interface (I) des porteurs libres issus de la jonction (200) de type p-n ou de la structure (201) de type p-in ;
d) polariser la jonction (200) de type p-n ou la structure (201) de type p-i-n de manière à appliquer un champ électrique au sein du cœur (20).

2. Procédé selon la revendication 1, dans lequel :
- l'étape c) conduit à une concentration des porteurs libres piégés à l'interface (I) ;
- l'étape c) est suivie d'une étape de recuit thermique exécutée selon un budget thermique adapté pour réduire la concentration des porteurs libres piégés à l'interface (I).

3. Procédé selon la revendication 1 ou 2, dans lequel l'étape c) est exécutée selon une dose d'irradiation supérieure ou égale à un seuil au-delà duquel les porteurs libres issus de la jonction (200) de type p-n ou de la structure (201) de type p-i-n ne circulent plus dans une zone du cœur (20) où un mode de propagation de l'onde électromagnétique est guidé.

4. Procédé selon l'une des revendications 1 à 3, dans lequel l'étape c) est exécutée avec des rayons X.

5. Procédé selon l'une des revendications 1 à 4, dans lequel l'étape b) est exécutée avec un cœur (20) réalisé dans un matériau choisi parmi le silicium, un carbure de silicium amorphe enrichi en silicium, un nitrure de silicium enrichi en silicium.

6. Procédé selon l'une des revendications 1 à 5, dans lequel l'étape a) est exécutée avec un substrat (1) de type semi-conducteur sur isolant comportant successivement :
- une plaquette (10) ;
- une couche diélectrique (11), formant une partie de la gaine optique (21) du guide d'onde (2) formé lors de l'étape b) ;
- une couche (12) réalisée dans un matériau semi-conducteur, à partir de laquelle est formé le cœur (20) du guide d'onde (2) lors de l'étape b).

7. Procédé selon l'une des revendications 1 à 6, dans lequel l'étape b) est exécutée avec une gaine optique (21) réalisée en dioxyde de silicium SiO₂.

8. Procédé selon l'une des revendications 1 à 7, dans lequel l'étape b) est exécutée de sorte que le guide d'onde (2) formé est en arête, le cœur (20) comportant :
- une zone inférieure (20a), planaire, comprenant la jonction (200) de type p-n ou la structure (201) de type p-i-n ;
- une zone supérieure (20b), formant une arête ou deux arêtes (A_{inf}, Aₛᵤₚ), surmontant la zone inférieure (20a), et où un mode de propagation de l'onde électromagnétique est guidé.

9. Procédé selon la revendication 8 en combinaison avec la revendication 3, dans lequel la dose d'irradiation est supérieure ou égale au seuil au-delà duquel les porteurs libres issus de la jonction (200) de type p-n ou de la structure (201) de type p-i-n ne circulent plus dans la zone supérieure (20b) du cœur (20) où le mode de propagation de l'onde électromagnétique est guidé.

10. Procédé selon l'une des revendications 1 à 9, dans lequel l'étape b) est exécutée de sorte que le guide d'onde (2) formé comporte une couche d'encapsulation, entourant la gaine optique (21).

## Patentansprüche

1. Verfahren zur Herstellung eines elektrooptischen Modulators mit Kerr-Effekt, umfassend die Schritte:
a) Verwenden eines Substrats (1);
b) Bilden eines Wellenleiters (2) auf dem Substrat (1), so dass eine Ausbreitung einer elektromagnetischen Welle geführt wird, wobei der Wellenleiter (2) umfasst:
- einen Kern (20), der einen pn-Übergang (200) oder eine pin-Struktur (201) beinhaltet;
- einen optischen Mantel (21), der den Kern (20) umgibt;
wobei der Kern (20) und der optische Mantel (21) eine Grenzfläche (I) aufweisen;
c) Bestrahlen der Grenzfläche (I) mit einer ionisierenden Strahlung, so dass an der Grenzfläche (I) freie Träger, die aus dem pn-Übergang (200) oder der pin-Struktur (201) hervorgegangen sind, eingefangen werden;
d) Polarisieren des pn-Übergangs (200) oder der pin-Struktur (201), so dass ein elektrisches Feld innerhalb des Kerns (20) angelegt wird.

2. Verfahren nach Anspruch 1, wobei:
- der Schritt c) zu einer Konzentration der an der Grenzfläche (I) eingefangenen freien Träger führt;
- auf den Schritt c) ein Schritt des thermischen Ausheilens folgt, der gemäß einem angepassten thermischen Budget durchgeführt wird, um die Konzentration der an der Grenzfläche (I) eingefangenen freien Träger zu reduzieren.

3. Verfahren nach Anspruch 1 oder 2, wobei der Schritt c) gemäß einer Bestrahlungsdosis durchgeführt wird, die größer oder gleich einem Schwellenwert ist, über dem die aus dem pn-Übergang (200) oder der pin-Struktur (201) hervorgegangenen freien Träger nicht mehr in einem Bereich des Kerns (20) zirkulieren, in dem eine Ausbreitungsmode der elektromagnetischen Welle geführt wird.

4. Verfahren nach einem der Ansprüche 1 bis 3, wobei der Schritt c) mit Röntgenstrahlen durchgeführt wird.

5. Verfahren nach einem der Ansprüche 1 bis 4, wobei der Schritt b) mit einem Kern (20) durchgeführt wird, der aus einem Material ausgeführt ist, das aus Silicium, einem an Silicium angereicherten amorphen Siliciumcarbid, einem an Silicium angereicherten Siliciumnitrid ausgewählt ist.

6. Verfahren nach einem der Ansprüche 1 bis 5, wobei der Schritt a) mit einem Substrat (1) vom Typ Halbleiter auf Isolator durchgeführt wird, umfassend nacheinander:
- ein Plättchen (10);
- eine dielektrische Schicht (11), die einen Teil des optischen Mantels (21) des bei dem Schritt b) gebildeten Wellenleiters (2) bildet;
- eine aus einem Halbleitermaterial ausgeführte Schicht (12), ausgehend von welcher bei dem Schritt b) der Kern (20) des Wellenleiters (2) gebildet wird.

7. Verfahren nach einem der Ansprüche 1 bis 6, wobei der Schritt b) mit einem optischen Mantel (21) durchgeführt wird, der aus Siliciumdioxid SiO₂ ausgeführt ist.

8. Verfahren nach einem der Ansprüche 1 bis 7, wobei der Schritt b) so durchgeführt wird, dass der gebildete Wellenleiter (2) an der Kante ist, wobei der Kern (20) umfasst:
- einen planaren unteren Bereich (20a), der den pn-Übergang (200) oder die pin-Struktur (201) beinhaltet;
- einen oberen Bereich (20b), der eine Kante oder zwei Kanten (A_{inf}, Aₛᵤₚ) bildet, der über dem unteren Bereich liegt (20a) und in dem eine Ausbreitungsmode der elektromagnetischen Welle geführt wird.

9. Verfahren nach Anspruch 8 in Verbindung mit Anspruch 3, wobei die Bestrahlungsdosis größer oder gleich dem Schwellenwert ist, über dem die aus dem pn-Übergang (200) oder der pin-Struktur (201) hervorgegangenen freien Träger nicht mehr in dem oberen Bereich (20b) des Kerns (20) zirkulieren, in dem die Ausbreitungsmode der elektromagnetischen Welle geführt wird.

10. Verfahren nach einem der Ansprüche 1 bis 9, wobei der Schritt b) so durchgeführt wird, dass der gebildete Wellenleiter (2) eine Kapselungsschicht umfasst, die den optischen Mantel (21) umgibt

## Claims

1. Method for manufacturing an electro-optic Kerr modulator, comprising the steps of:
a) using a substrate (1);
b) forming a waveguide (2) on the substrate (1) so as to guide propagation of an electromagnetic wave, the waveguide (2) comprising:
- a core (20), comprising a p-n junction (200) or a p-i-n structure (201);
- an optical cladding (21), encircling the core (20);
the core (20) and optical cladding (21) having an interface (I);
c) irradiating the interface (I) with ionizing radiation so as to trap at the interface (I) free carriers issuing from the p-n junction (200) or the p-i-n structure (201);
d) biasing the p-n junction (200) or p-i-n structure (201) so as to apply an electric field within the core (20).

2. Method according to Claim 1, wherein:
- step c) leads to a concentration of the free carriers trapped at the interface (I);
- step c) is followed by a step of thermal annealing executed according to a thermal budget configured to reduce the concentration of the free carriers trapped at the interface (I).

3. Method according to Claim 1 or 2, wherein step c) is executed with a radiation dose greater than or equal to a threshold beyond which the free carriers issuing from the p-n junction (200) or the p-i-n structure (201) no longer flow through a region of the core (20) in which a mode of propagation of the electromagnetic wave is guided.

4. Method according to any of Claims 1 to 3, wherein step c) is executed with X-rays.

5. Method according to any of Claims 1 to 4, wherein step b) is executed with a core (20) made of a material selected from silicon, silicon-enriched amorphous silicon carbide, and silicon-enriched silicon nitride.

6. Method according to any of Claims 1 to 5, wherein step a) is executed with a semiconductor-on-insulator substrate (1) comprising, in succession:
- a wafer (10);
- a dielectric layer (11), forming part of the optical cladding (21) of the waveguide (2) formed in step b);
- a layer (12) made of a semiconductor material, from which layer the core (20) of the waveguide (2) is formed in step b).

7. Method according to any of Claims 1 to 6, wherein step b) is executed with an optical cladding (21) made of silicon dioxide SiO₂.

8. Method according to any of Claims 1 to 7, wherein step b) is executed so that the formed waveguide (2) is a ridge waveguide, the core (20) comprising:
- a planar lower region (20a), comprising the p-n junction (200) or the p-i-n structure (201);
- an upper region (20b), forming one ridge or two ridges (A_{inf}, Aₛᵤₚ), surmounting the lower region (20a), and in which a mode of propagation of the electromagnetic wave is guided.

9. Method according to Claim 8 in combination with Claim 3, wherein the radiation dose is greater than or equal to the threshold beyond which the free carriers issuing from the p-n junction (200) or the p-i-n structure (201) no longer flow through the upper region (20b) of the core (20) in which the mode of propagation of the electromagnetic wave is guided.

10. Method according to any of Claims 1 to 9, wherein step b) is executed so that the formed waveguide (2) comprises an encapsulation layer, encircling the optical cladding (21).
